# FASCICULE DE BREVET EUROPEEN

(11) **EP 1 528 457 B1**
(45) Date de publication et mention de la délivrance du brevet: **21.10.2009**
(21) Numéro de dépôt: 03024851.2
(22) Date de dépôt: 31.10.2003
(51) Int. Cl.: G06F 1/32, H04B 1/16

(54) **Système à dépassement variable de temps pour un appareil électronique portable alimenté par une pile**
Adaptives Zeitunterbrechungssystem für ein tragbares elektronisches Gerät, der durch eine Batterie angetrieben ist
Adaptive timeout system for a portable, battery powered electronic device

(43) Date de publication de la demande: 04.05.2005
(73) Titulaire: ASULAB S.A., 2074 Marin (CH)
(72) Inventeur: Frenkel, Erik Jan, 2009 Neuchâtel (CH); Guanter, Jean-Charles, 2517 Diesse (CH)
(74) Mandataire: Ravenel, Thierry Gérard Louis

(56) Documents cités:
- US-A- 4 158 285
- US-A- 5 627 882
- US-A- 5 767 594
- US-A- 5 913 067
- US-B1- 6 526 433

## Description

La présente invention concerne un dispositif à déclenchement interactif pour un appareil électronique portable alimenté par une pile ou un accumulateur qui permet notamment d'économiser de l'énergie en ne laissant pas inutilement l'appareil en fonctionnement, et de ne pas en gaspiller en enclenchant inopinément une fonction non souhaitée.

Le dispositif permet également de modifier le temps avant déclenchement pour permettre à un utilisateur novice de disposer d'un temps suffisamment long pour effectuer ses manipulations sur l'appareil électronique portable, sans s'exposer à un déclenchement inopportun.

On connaît déjà depuis longtemps des appareils électroniques portables ou non, tel qu'un ordinateur, une calculatrice de poche ou une montre-bracelet, qui sont équipés d'une minuterie permettant d'interrompre l'alimentation au bout d'une durée déterminée de non-utilisation, par exemple après la dernière manipulation effectuée sur un clavier. Dans certain cas, il est possible de programmer le délai au bout duquel la minuterie pré-programmée interrompt l'alimentation, ce délai demeurant inchangé pendant toute une série de manipulations.

Une montre de ce type est décrite dans US 4 158 285.

Pour obtenir une réduction de la consommation d'énergie, par exemple dans une montre-bracelet électronique, on peut également agir sur le circuit d'alimentation interposé entre la source d'énergie et les moyens de traitement et d'affichage de l'heure, comme cela est par exemple décrit dans le brevet US 4 428.040.

Dans les montres-bracelets de nombreux circuits et/ou dispositifs ont également été conçus pour séparer le comptage du temps (mode veille) de son affichage (mode actif), beaucoup plus exigeant en énergie. Le dispositif le plus simple consiste en un bouton-poussoir sur lequel l'utilisateur appuie uniquement pendant le temps nécessaire à la lecture de l'heure. Le document US 6 320 822 décrit un autre dispositif dans lequel le passage en mode veille d'un appareil électronique s'effectue automatiquement lorsque l'appareil n'est plus porté par l'usager, l'exemple donné étant celui d'une montre-bracelet dont le générateur/détecteur est entraîné par une masse oscillante.

Dans ces dispositifs de l'art antérieur, on voit qu'il n'est pas prévu d'interaction entre l'appareil électronique et un utilisateur pour faire varier le délai de mise en mode veille, le plus économique en énergie, en fonction de l'apprentissage de l'utilisateur à enchaîner plus rapidement au moins deux manipulations, ou au contraire dans le cas où un autre utilisateur serait plus lent pour effectuer cette opération. Il n'est pas non plus prévu une sécurité évitant la mise en route inopinée d'une fonction non souhaitée lorsque l'appareil reste trop longtemps en marche après la dernière manipulation.

L'invention concerne donc un dispositif permettant d'économiser l'énergie fournie par la source d'énergie de l'appareil électronique en déclenchant ses moyens de saisie et d'affichage au bout d'un délai variable qui va dépendre, à partir d'une valeur initiale pré-configurée ou mémorisée, de la plus ou moins grande habilité de l'utilisateur. Ainsi, après une série de manipulations effectuées par un utilisateur habile, la durée autorisée pour une manipulation avant déclenchement diminuera pour la prochaine série de manipulations. Au contraire, un utilisateur qui aura été moins habile pour effectuer une série de manipulations, ou qui le deviendra de façon accidentelle, disposera pour la série suivante de manipulations d'une durée autorisée avant déclenchement un peu plus longue. Le temps maximum autorisé entre le début et la fin d'une manipulation avant déclenchement sera désigné par la suite par "Time Out", par abréviation TO.

Dans le cas où les moyens de saisie sont de type tactile, c'est-à-dire lorsqu'ils sont constitués par des capteurs activables par le contact d'un doigt, on entend par "durée d'une manipulation" le temps écoulé entre le moment où l'utilisateur lève son doigt d'un capteur et celui où il le pose sur un autre capteur, le temps pendant lequel il maintient le doigt sur un capteur n'étant pas décompté.

Il est évidemment possible, en fonction de l'appareil électronique dans lequel un tel dispositif selon l'invention est intégré, de définir autrement la "durée d'une manipulation". Il est par exemple possible, contrairement à ce qui a été dit ci-dessus, de comptabiliser dans ladite "durée" le temps pendant lequel un utilisateur maintient le capteur actif avant d'effectuer une action déterminant le temps de manipulation TM.

Dans la suite de la description, TM désignera donc une "durée de manipulation" selon l'une ou l'autre des acceptions ci-dessus, voire d'autres à la portée de l'homme de métier. Le temps qui s'écoule entre deux manipulations sera désigné par la suite par TC, et celui enregistré au début de la manipulation suivante par TM. Pour une meilleure compréhension de l'invention, on désignera également par la suite par TX (Time Max) la durée la plus longue enregistrée entre deux manipulations successives dans une série de manipulations, et par TS un temps de sécurité dont le rôle essentiel sera expliqué plus loin.

A cet effet, l'invention a pour objet un dispositif à déclenchement interactif tel que défini dans la revendication 1.

La mémoire de ce dispositif comporte quatre zones. Une première zone permet de mémoriser le temps de sécurité TS qui est une valeur fixe installée lors de la fabrication de l'appareil électronique, mais que l'utilisateur peut éventuellement modifier par manipulation d'un organe de commande extérieur, ou qui peut être recalculée à la fin d'une série de manipulations en pourcentage de la valeur du dernier TOM défini ci-après.

Une deuxième zone est constituée par un registre à décalage TOM dont la valeur qui s'inscrit dans la dernière ligne à la fin d'une série de manipulations est la valeur TX mémorisée dans une troisième zone. A la fin d'une série de manipulations, un nouveau TO est mémorisé pour la série suivante de manipulations dans une quatrième zone, ledit nouveau TO étant la somme de TS et de la moyenne arithmétique des valeurs inscrites dans le registre TOM, ce qui peut s'exprimer par TO = TOM + TS.

Il apparaît ainsi que l'invention est remarquable en ce que la valeur fixe du TS, pour une série de manipulations, permet notamment d'avoir, pour une nouvelle série de manipulations, un TO plus grand que le TO précédent lorsque TOM augmente.

Dans un mode d'application préféré, le dispositif de déclenchement interactif selon l'invention est intégré dans une montre-bracelet électronique, les moyens d'affichage, tels qu'un affichage analogique par aiguilles ou un affichage digital à cristaux liquides, étant supportés par le cadran et les moyens de saisie étant formés par un écran comportant des touches tactiles à électrodes transparentes supportées par la glace. Les touches peuvent également être intégrées dans la lunette, le boîtier, ou le bracelet en étant de type tactile capacitif ou résistif, soit encore être formées par des contacteurs sensibles à la pression.

D'autres caractéristiques et avantages de la présente invention apparaîtront à la lecture de la description d'une montre-bracelet prise à tire d'exemple illustratif et non limitatif d'application d'un dispositif de déclenchement interactif selon l'invention, en référence aux dessins annexés dans lesquels :

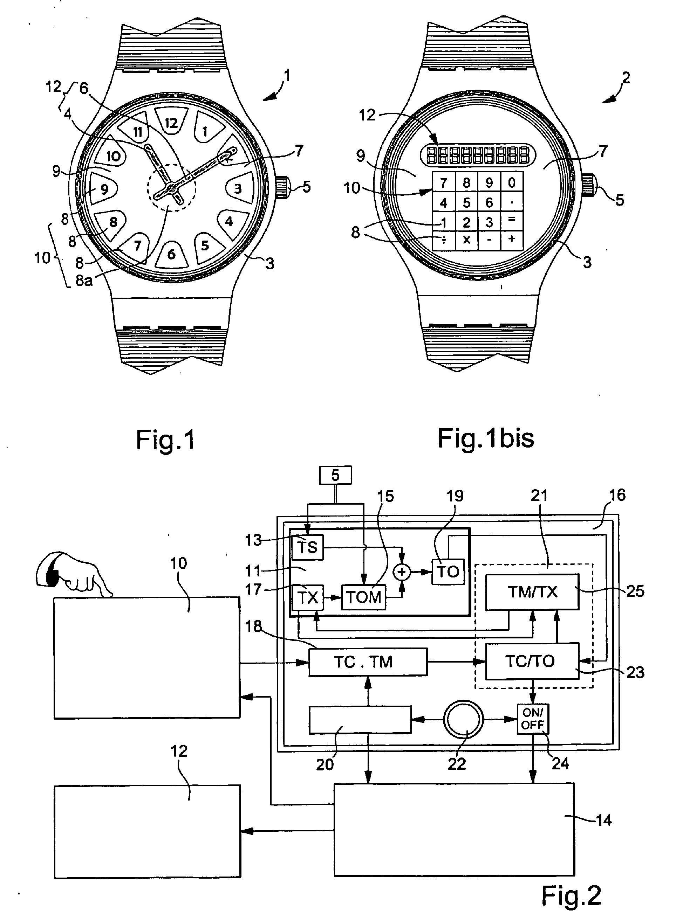

- la figure 1 représente une montre-bracelet à commande et lecture tactile des fonctions horaires;
- la figure 1bis représente une montre-bracelet faisant calculatrice;
- la figure 2 représente un schéma sous forme de blocs d'une mise en oeuvre du dispositif de déclenchement interactif;
- la figure 3 représente un organigramme du dispositif mis en oeuvre à la figure 2, lorsque aucune manipulation n'est effectuée après la mise en route.;
- la figure 4 représente le même organigramme que celui de la figure 3, lorsqu'on effectue une manipulation, et
- la figure 5 représente le même organigramme que celui de la figure 3 lorsqu'on effectue plusieurs manipulations.

A la figure 1, on a représenté à titre d'exemple une montre-bracelet à commande et lecture tactile des fonctions horaires décrite plus en détails dans les brevets US 5 559 761 et US 6 052 339. Elle comporte fondamentalement un boîtier 3 renfermant un mouvement horloger (non représenté), alimenté par une pile ou un accumulateur 22, permettant l'affichage d'une indication horaire 12 au moyen d'aiguilles 4, 6 disposées au-dessus d'un cadran 9. Cette montre-bracelet a la particularité de posséder, au niveau de sa glace 7, des moyens de saisie 10 constitués par des touches tactiles 8 à électrodes transparentes disposées sur le pourtour de la glace au-dessus des douze index horaires ainsi qu'éventuellement une autre touche tactile 8a située au centre de la glace. De façon équivalente les touches 8, tactiles ou non, pourraient être reparties sur la lunette ou sur la carrure. Pour avoir accès à une fonction horaire, telle que la lecture de l'heure courante, ou le réglage d'une heure d'alarme, il est nécessaire, après une mise en fonctionnement, par exemple au moyen d'une action exercée sur une couronne-poussoir 5, d'effectuer une série de manipulations en passant son doigt sur les capteurs 8 pour avoir l'information horaire délivrée, soit de façon visuelle par les aiguilles 4, 6, soit sous forme de vibrations codées perceptibles au doigt et/ou au poignet s'il s'agit d'une montre-bracelet également destinée à des malvoyants.

Il est bien évident, d'une part que tous les utilisateurs n'auront pas la même dextérité pour enchaîner les manipulations, d'autre part qu'ils peuvent être capables par l'apprentissage d'aller de plus en plus vite, ou au contraire qu'une moins bonne "performance" soit réalisée par un nouvel utilisateur, ce qui ne permet pas d'installer dans le dispositif une durée standard avant déclenchement satisfaisante dans tous les cas, notamment lorsqu'on souhaite économiser de l'énergie.

Ce qui précède s'applique également à la montre-calculatrice représentée à la figure 1bis dans laquelle les moyens d'affichage 12 sont constitués par un écran digital à cristaux liquides et les moyens de saisie 10 par un clavier alphanumérique comportant seize touches 8 tactiles de type capacitif ou résistif. Le clavier peut même comporter un plus grand nombre de touches pour l'écriture d'un message comme décrit par exemple dans le brevet EP 1 235 122. Le clavier peut également être intégré dans la lunette, le boîtier, ou les brins du bracelet comme décrit dans les brevets US 6 590 835 et EP 1 248 165. Dans tous ces cas, il est certainement encore plus difficile de fixer a priori un temps de manipulation standard d'une touche 8 à une autre, sauf à prévoir un temps avant déclenchement très long, comme c'est le cas avec les calculatrices de table.

Ainsi pour économiser de l'énergie, ou éviter une fausse manoeuvre, il convient que l'alimentation en énergie des moyens de saisie 10 et des moyens d'affichage 12 soit coupée dans un délai "raisonnable", c'est-à-dire ni trop long, ni trop court pour ne pas interrompre une série de manipulations, ce délai désigné par la suite "Time Out", par abréviation "TO", étant variable d'un individu à l'autre, et évolutif pour le même individu.

Le dispositif selon l'invention vise donc à adapter automatiquement ce "Time Out" et à déclencher de façon interactive l'alimentation des moyens de saisie 10 et des moyens d'affichage 12, comme cela est maintenant expliqué en référence au schéma bloc de la figure 2.

Outre les moyens de saisie 10 et les moyens d'affichage 12 déjà cités, le dispositif comprend des moyens de commande 14 pour commander les moyens d'affichage 12, et une unité de traitement 16 interposée entre lesdits moyens de commande 14 et les moyens de saisie 10.

L'unité de traitement 16, qui constitue le coeur du dispositif, comporte trois éléments essentiels, à savoir une mémoire 11, un compteur 18 qui reçoit des signaux des moyens de saisie 10, et un comparateur 21 composé de deux unités 23 et 25 en cascade. Dans le schéma de la figure 2 on a également représenté une base de temps 20 communiquant des signaux de temps au compteur 18, une pile ou un accumulateur 22, relié à la fois à la base de temps 20 et à un commutateur 24 du dispositif.

La mémoire 11 comporte quatre zones 13, 15,17 et 19 interconnectées mais ayant des fonctions bien distinctes.

Une première zone 13 permet de mémoriser, lors de la construction du dispositif, le temps sécurité TS qui constitue l'élément clef pour la variation du Time Out d'une série de manipulations à l'autre. Cette valeur de TS peut être une norme de construction ne pouvant être modifié par l'utilisateur. Il est également possible d'envisager de faire varier la valeur de TS par une action appropriée effectuée au moyen d'un organe de commande extérieur, symbolisé par la couronne-poussoir 5, ou en recalculant sa valeur à partir d'autres temps caractéristique du dispositif. A titre d'exemple on prendra pour la suite TS = 2 secondes, bien que d'autres choix soient possibles.

Une deuxième zone 15 est constituée par un registre à décalage dans lequel le même temps est inscrit sur toutes les lignes au début de la première série de manipulations. A titre d'exemple on considérera par la suite que, au début d'une série de manipulations, le registre 15 comporte 10 lignes correspondant chacune à 10 secondes, c'est-à-dire à une valeur moyenne de 10 secondes désignée par Time Out Moyen, par abréviation TOM. Dans cet exemple on voit que TS représente 20 % de TOM.

Après plusieurs séries de manipulations les valeurs inscrites dans chaque ligne seront modifiées et la valeur inscrite dans la dernière ligne, à savoir celle qui sera introduite à la fin de chaque série de manipulations, correspond à un temps Time Max, par abréviation TX, établi par la deuxième unité 25 du comparateur 21 en fonction du temps TM le plus long de la dernière série de manipulations. Il est bien évident qu'au début d'une série de manipulation TX a pour valeur zéro. La valeur de TX établie au cours d'une série de manipulations, est mémorisée dans une troisième zone 17 pour être transférée dans la zone 15 en fin de manipulations.

La mémoire comporte enfin une quatrième zone 19 permettant de calculer le Time Out pour la prochaine série de manipulations comme étant égal à la somme TS + TOM à savoir en se référant aux valeurs données à titre d'exemple à TO = 2s + 10s = 12 secondes.

Ainsi, si on considère une manipulation dans une série de manipulations, le compteur 18 transmet à la première unité 23 du comparateur 21 un temps TC qui est comparé à TO. Si TC devient supérieur ou égal à TO, un signal est transmis au commutateur ON/OFF 24 pour interrompre, par l'intermédiaire des moyens de commande 14, l'alimentation en énergie des moyens de saisie 10 et d'affichage 12. Si au contraire, TC < TO, cela signifie que la manipulation a été plus petite que le Time Out autorisé et la valeur TM correspondante va être comparée dans la deuxième unité 25 du comparateur 21 à la valeur TX. Dans le mode de réalisation préféré, lorsque TM est supérieur à TX, TM devient la nouvelle valeur de TX pour la manipulation suivante. Si au contraire TM est inférieur à TX, la valeur de TX est inchangée.

A la fin d'une série de manipulations, c'est-à-dire lorsque TC devient supérieur à TO, TX est introduit dans le registre à décalage 15, et la valeur la plus ancienne est supprimée. Un nouveau TOM est alors calculé comme indiqué précédemment par moyenne arithmétique de toutes les valeurs inscrites dans le registre à décalage 15, moyenne à laquelle on ajoute la valeur de TS pour établir le nouveau Time Out pour la série suivante de manipulations.

Il peut se produire qu'un utilisateur habile ayant amené son TO, par exemple à 5 secondes, prête sa montre-bracelet à un utilisateur novice qui ne réussira pas à enchaîner les manipulations qu'il souhaite effectuer avec un TO aussi court. En plus du dispositif selon l'invention en tant que tel, il pourrait donc également être prévu qu'une manipulation particulière de la couronne-poussoir 5, ou de tout autre organe de commande extérieur, permette de réinitialiser les valeurs contenues dans le registre à décalage 15 au moment de la première utilisation, c'est-à-dire dans notre exemple à 10 secondes par ligne permettant de ramener le Time Out à sa valeur initiale, à savoir 12 secondes. Il peut même être prévu, éventuellement au moyen d'un autre organe de commande non représenté, d'incrémenter ou de décrémenter librement les lignes du registre 15 pour choisir un autre TOM et donc un autre TO initial.

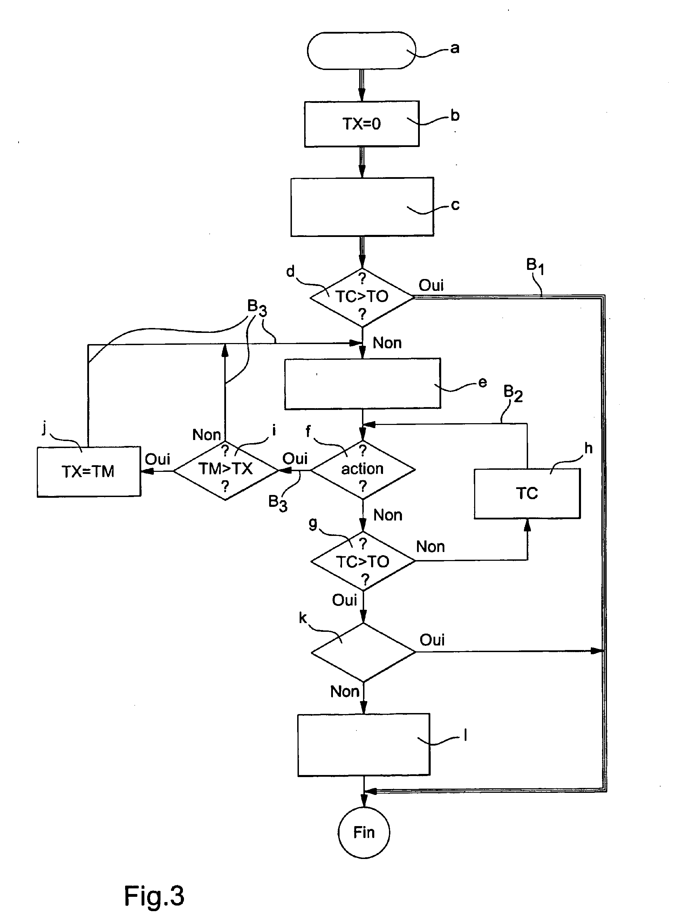

En se référant maintenant aux organigrammes reproduits dans les figures 3, 4 et 5, on montre ci-après comment le Time Out TO s'adapte à la plus ou moins grande habilité de l'utilisateur. Les exemples montrent de façon plus précise le fonctionnement du dispositif selon l'invention représenté à la figure 1 pour une montre-bracelet à commande et lecture tactile de l'heure lorsque le Time Out initial est TO = TS + TOM = 2s + 10s = 12s.

### Exemple 1. Mise en route sans manipulation (Figure 3)

L'étape a correspond à la mise en route, étant rappelé en b qu'au début d'une série de manipulations le Time Max est TX = 0. En c le dispositif attend le début de la première série de manipulations en décomptant le temps TC qui s'écoule depuis la mise en route pour le comparer en d à TO. Lorsque TC devient supérieur à TO, c'est-à-dire 12s, le déclenchement se produit et on est conduit par la boucle *B1* à la fin de la série de manipulations. Aucun temps de manipulation TM n'ayant été enregistré, les valeurs contenues dans la mémoire sont inchangées et le Time Out pour la série suivante de manipulations sera encore de 12s.

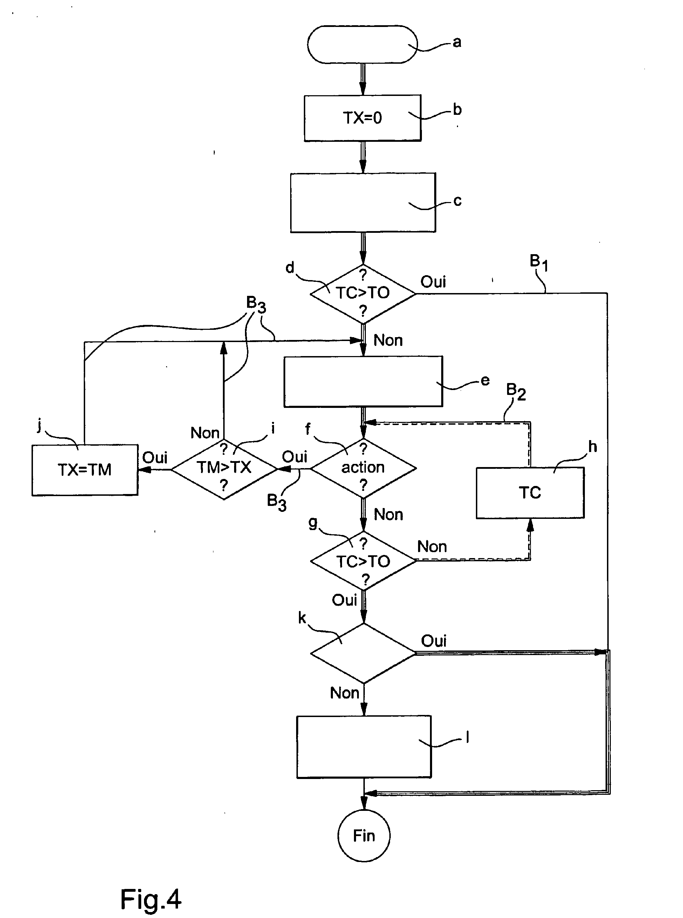

### Exemple 2 - Mise en route et une seule manipulation (Figure 4)

Il s'agit par exemple, pour une personne malvoyante, de vouloir contrôler l'état d'alarme de sa montre-bracelet en appuyant sur une seule touche tactile, par exemple sur la touche 8a située au centre du cadran qui peut constituer l'organe de commande pour cette fonction. Cette manipulation ne permet donc pas de définir un temps de manipulation TM. En se référant à la figure 4, le temps courant TC n'étant pas supérieur au Time Out, dans l'étape d le dispositif est en attente de la fin d'action de manipulation dans l'étape e jusqu'à ce que le doigt soit relevé. S'il n'y a pas de prochaine action dans l'étape *f,* l'étape *g* contrôle si le Time Out est écoulé. La boucle *B₂* montre simplement que ce contrôle est effectué en boucle. Si l'étape *g* détermine que TO est écoulé, l'étape *k* détermine qu'une seule action a été effectuée et renvoie sur la boucle B₁ de fin de manipulations, les paramètres en mémoire étant comme dans l'exemple précédent, inchangés.

On observera que, selon un autre agencement de l'unité de traitement 16, la mise en marche pourrait être prise en compte comme première action de manipulations, ce qui correspondrait à l'exemple 3 qui suit.

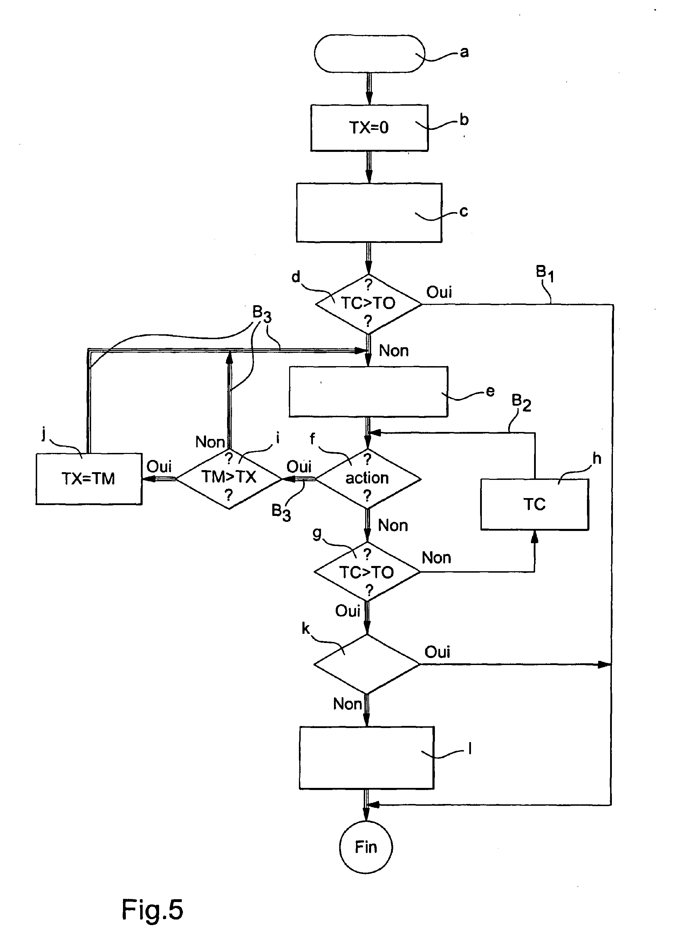

### Exemple 3 - Mise en route et une série de plusieurs manipulations (figure 5)

II s'agit par exemple d'un utilisateur qui veut, au moyen des touches tactiles, mettre sa montre-bracelet à l'heure, en plaçant son doigt sur une touche tactile pour déplacer l'aiguille des heures, puis en faisant de même avec l'aiguille des minutes, mais en s'y prenant en plusieurs fois, c'est-à-dire en faisant plusieurs erreurs.

En se reportant à la figure 5 on voit que dans l'étape *f* il y a une action permettant de définir un temps de pause entre les manipulations TM qui va être comparé par la boucle B₃ dans l'étape *i* au Time Max. Si TM > TX, ladite valeur TM deviendra la nouvelle valeur de TX. Si au contraire TM < TX, la valeur de TX sera inchangée. La boucle *B₃* sera parcourue aussi longtemps que des valeurs TM pourront être comptées à chaque nouvelle manipulation. En fin de série de manipulations le registre à décalage prend en compte cette valeur de TX et élimine la plus ancienne des autres valeurs inscrites dans ledit registre. Un nouveau TOM est calculé dans l'étape /, et un nouveau TO est établi, comme expliqué ci-après par les exemples 4 et 5 se référant à un utilisateur expérimenté, puis à un utilisateur novice toujours dans l'hypothèse d'un Time Out initial de 12s, en supposant qu'il y a trois séries de manipulations.

### Exemple 4 - Utilisateur expérimenté

L'utilisateur expérimenté effectue la première série de manipulations pour arriver en fin de manipulations à un TX₁ de 5 secondes, la deuxième à un TX₂ de 8 secondes et la troisième à un TX₃ de 4 secondes, ce qui permet de représenter le registre à décalage par le tableau 1.

**Tableau 1**

| ligne | Etat initial | Après TX₁ | Après TX₂ | Après TX₃ |
|---|---|---|---|---|
| 9 | 10 | 10 | 10 | 10 |
| 8 | 10 | 10 | 10 | 10 |
| 7 | 10 | 10 | 10 | 10 |
| 6 | 10 | 10 | 10 | 10 |
| 5 | 10 | 10 | 10 | 10 |
| 4 | 10 | 10 | 10 | 10 |
| 3 | 10 | 10 | 10 | 10 |
| 2 | 10 | 10 | 10 | 5 |
| 1 | 10 | 10 | 5 | 8 |
| 0 | 10 | 5 | 8 | 4 |

La valeur 5 s'inscrit dans la dernière ligne après la première série de manipulations. Après la deuxième série de manipulations, il s'inscrit la valeur 8, et après la troisième série de manipulations la valeur 4 occupe la dernière ligne.

Pour la série suivante de manipulations, le nouveau TOM sera donc TOM = 87/10 = 8,7s et le Time Out aura été abaissé à TO = 8,7 + 2 = 10,7s lorsque TS = 2s est une valeur fixe ne pouvant être changée.

Si au contraire une nouvelle valeur de TS est recalculée en pourcentage (20%) de TOM la nouvelle valeur du Time Out sera TO = 8,7 + 0,2 x 8.7 = 10,44s.

### Exemple 5 - Utilisateur novice

A l'issu de ses trois séries de manipulations l'utilisateur novice obtient les valeurs TX₁ = 11 s, TX₂ = 11 s et TX₃ = 12s, c'est-à-dire que les trois dernières lignes du registre auront pour valeur 11s, 11s et 12s.

Pour la série de manipulations suivantes le nouveau TOM sera donc TOM = 104/10 = 10,4s et le Time Out aura été élevé à TO = 12,4s, respectivement 12,48s.

Les valeurs données dans les exemples 4 et 5 sont illustratives, car il est bien évident qu'on pourrait observer de plus grandes variations du Time Out autour de sa valeur initiale en ayant un plus grand nombre de séries de manipulations ou un plus petit nombre de lignes dans le registre 15. Ainsi, dans l'exemple 4, si le registre n'avait eu que 5 lignes, le nouveau Time Out aurait été ramené à 9,4s, respectivement 8,88 s.

D'autres variantes au dispositif peuvent être imaginées par l'homme du métier, sans sortir du cadre de la présente invention tel que défini par les revendications.

## Revendications

1. Dispositif de déclenchement interactif d'un appareil électronique portable (1) alimenté par une pile ou un accumulateur (22) et comprenant :
- des moyens de saisie (10) permettant à un utilisateur de sélectionner des données ou des fonctions par des manipulations successives,
- des moyens d'affichage (12) agencés pour fournir une information représentative de la donnée correspondant à la manipulation effectuée,
- des moyens de commande (14) connectés aux moyens d'affichage (12) et agencés de sorte à fournir une commande représentative de ladite donnée,
**caractérisé en ce qu'**il comporte en outre une unité de traitement (16) interposée entre les moyens de saisie (10) et les moyens de commande (14), ladite unité de traitement (16) comportant une mémoire (11) agencée pour mémoriser des temps de référence et notamment le temps maximum autorisé "TO" entre le début et la fin d'une manipulation , un compteur (18) relié à une base de temps (20) enregistrant le temps "TC" qui s'écoule entre deux manipulations et le temps total écoulé "TM" entre deux manipulations, et un comparateur (21) comportant une première unité (23) agencée pour agir sur un commutateur ON/OFF (24) pour interrompre, par l'intermédiaire des moyens de commande (14), l'alimentation en énergie des moyens de saisie (10) et d'affichage (12) lorsque TC > TO, ladite première unité (23) étant en outre agencée pour modifier en continu et à la fin d'une série de manipulations certains temps de référence de la mémoire (11) dont le temps maximum autorisé "TO" entre le début et la fin d'une manipulation.

2. Dispositif selon la revendication 1, **caractérisé en ce que** la mémoire (11) comporte une première zone (13) permettant de mémoriser un temps de sécurité "TS", une deuxième zone (15) constituée par un registre à décalage, une troisième zone (17) permettant de mémoriser un "Time Max", par abréviation "TX", ayant une valeur établie dans une deuxième unité (25) du comparateur (21) par comparaison avec le dernier TM, ladite valeur TX venant s'inscrire dans la dernière ligne du registre à décalage (15) à la fin d'une série de manipulations, et une quatrième zone (19) permettant de calculer et de mémoriser le TO de la série suivante de manipulations à une valeur correspondant à TO = TOM + TS, où TOM représente la moyenne arithmétique des valeurs inscrites dans ledit registre à décalage.

3. Dispositif selon la revendication 2, **caractérisé en ce que** TS est une valeur propre au dispositif lors de sa construction et ne pouvant être modifiée.

4. Dispositif selon revendication 2, **caractérisé en ce que** TS est une valeur propre au dispositif lors de sa construction et pouvant être modifiée, soit par manipulation d'un organe de commande extérieur (5), soit en définissant le nouveau TS en pourcentage du dernier TOM.

5. Dispositif selon la revendication 2, **caractérisé en ce que,** lors d'une série de manipulations, TM devient la nouvelle valeur de TX lorsque, une valeur de TM est supérieure à la dernière valeur de TX.

6. Dispositif selon la revendication 2, **caractérisé en ce que,** lors d'une série de manipulations, TM reste inférieur à la valeur de TX, ladite valeur de TX reste inchangée.

7. Dispositif selon la revendication 1, **caractérisé en ce qu'**il comporte en outre un organe de commande extérieur (5) permettant, quel que soit le nombre de séries de manipulations antérieurement effectuées, de ramener le TO à sa valeur initiale, voire de le modifier en plus ou en moins.

8. Dispositif selon la revendication 7, **caractérisé en ce que** le TO est modifié au moyen de l'organe de commande (5) en changeant la valeur inscrite dans chaque ligne du registre à décalage (15) de la mémoire (11).

9. Dispositif selon la revendication 1, **caractérisé en ce que** les moyens de saisie (10) sont constitués par un clavier comportant des touches numériques ou alphanumériques (8).

10. Dispositif selon la revendication 9 **caractérisé en ce que** les touches (8) sont de type tactile, capacitif ou résistif.

11. Dispositif selon la revendication 9, **caractérisé en ce que** les touches (8) sont formées par des contacteurs sensibles à une pression.

12. Dispositif selon la revendication 1, **caractérisé en ce que** les moyens d'affichage (12) sont constitués par des aiguilles (4, 6).

13. Dispositif selon la revendication 1, **caractérisé en ce que** les moyens d'affichage (12) sont constitués par un affichage digital à cristaux liquides.

14. Dispositif selon la revendication 1, **caractérisé en ce que** les moyens d'affichage (12) sont constitués par des vibrations ou des trains de vibrations codés émis par le dispositif pour indiquer un message à l'utilisateur.

15. Dispositif selon une quelconque des revendications 1 à 14, **caractérisé en ce que** l'appareil électronique portable (1) est une montre-bracelet comportant un boîtier (3), un cadran (9), une glace (7) et une base de temps (18) permettant d'afficher l'heure courante lorsque les moyens de saisie (10) sont inactifs et **en ce que** les moyens d'affichage (12) sont supportés par le cadran (9) et les moyens de saisie (10) sont formés par un écran tactile à électrodes transparentes supportées par la glace (7) ou par des touches intégrées dans la lunette, ou dans le boîtier, ou dans les brins de bracelet.

## Claims

1. Interactive switching device for a portable electronic apparatus (1) powered by a battery or an accumulator (22) and including:
- data entry means (10) enabling a user to select data or functions by successive manipulations;
- display means (12) arranged to provide information representative of the data corresponding to the manipulation carried out;
- control means (14) connected to the display means (12) and arranged so as to provide a command representative of said data, **characterised in that** it further includes a processing unit (16) inserted between the data entry means (10) and the control means (14), said processing unit (16) including a memory (11) arranged to store reference times or durations and particularly the maximum time or duration authorised "TO" between the start and end of a manipulation, a counter (18) connected to a time base (20) storing the time "TC" that elapses between two manipulations and the total elapsed time "TM" between two manipulations, and a comparator (21) including a first unit (23), arranged to act on an ON/OFF switch (24) to interrupt, via control means (14), the energy supply to the data entry means (10) and the display means (12) when TC>TO, said first unit (23) being further arranged to continuously alter and at the end of a series of manipulations certain reference times or durations of the memory (11) including the maximum time or duration authorised "TO".

2. Device according to claim 1, **characterised in that** the memory (11) includes a first zone (13) for storing a security time "TS", a second zone (15) formed by a shift register, a third zone (17) for storing a "Time Max", "TX" by abbreviation, having a value established in a second unit (25) of the comparator (21) by comparison with the last TM, said TX value being stored in the last line of the shift register (15) at the end of a series of manipulations, and a fourth zone (19) for calculating and storing the TO of the following series of manipulations at a value corresponding to TO = TOM +TS, where TOM represents the mean arithmetic value of the values inscribed in said shift register.

3. Device according to claim 2, **characterised in that** TS is a value peculiar to the device during its manufacturing and unable to be altered.

4. Device according to claim 2, **characterised in that** TS is a value peculiar to the device during its manufacturing and able to be altered, either by manipulating an external control member (5), or by defining the new TS as a percentage of the last TOM.

5. Device according to claim 2, **characterised in that**, during a series of manipulations, TM becomes the new TX value when a TM value is greater than the last TX value.

6. Device according to claim 2, **characterised in that**, during a series of manipulations, TM remains less than the TX value, said TX value remains unchanged.

7. Device according to claim 1, **characterised in that** it further includes an external control member (5) which, whatever the number of series of manipulations previously carried out, allows the TO to be brought to its initial value, or to be altered to make it higher or lower.

8. Device according to claim 7, **characterised in that** the TO is altered by means of the control member (5), by changing the value stored in each line of the shift register (15) of the memory (11).

9. Device according to claim 1, **characterised in that** the data entry means (10) are formed by a keyboard including digital or alphanumerical keys (8).

10. Device according to claim 9, **characterised in that** the keys (8) are of the touch, capacitive or resistive type.

11. Device according to claim 9, **characterised in that** the keys (8) are formed by pressure sensitive contacts.

12. Device according to claim 1, **characterised in that** the display means (12) are formed by hands (4, 6).

13. Device according to claim 1, **characterised in that** the display means (12) are formed by a liquid crystal digital display.

14. Device according to claim 1, **characterised in that** the display means (12) are formed by vibrations or encoded vibration trains transmitted by the device to indicate a message to the user.

15. Device according to any of claims 1 to 14, **characterised in that** the portable electronic apparatus (1) is a wristwatch including a case (3) a dial (9), a glass (7) and a time base (18) for displaying the current time when the data entry means (10) are inactive and **in that** the display means (12) are carried by the dial (9) and the data entry means (10) are formed by a touch screen with transparent electrodes carried by the glass (7) or by keys integrated in the bezel, or in the case, or in the strands of a wristband.

## Patentansprüche

1. Vorrichtung zum interaktiven Bedienen eines tragbaren elektronischen Geräts (1), das durch eine Batterie oder einen Akkumulator (22) versorgt wird, die umfasst:
- Erfassungsmittel (10), die einem Anwender ermöglichen, Daten oder Funktionen durch aufeinander folgende Manipulationen auszuwählen,
- Anzeigemittel (12), die dazu ausgelegt sind, Informationen zu liefern, die die Daten repräsentieren, die der ausgeführten Manipulation entsprechen,
- Steuermittel (14), die mit den Anzeigemitteln (12) verbunden sind und dazu ausgelegt sind, einen Befehl zu liefern, der die Daten repräsentiert,
**dadurch gekennzeichnet, dass** sie außerdem eine Verarbeitungseinheit (16) umfasst, die zwischen die Erfassungsmittel (10) und die Steuermittel (14) eingefügt ist, wobei die Verarbeitungseinheit (16) versehen ist mit einem Speicher (11), der dazu ausgelegt ist, Referenzzeiten und insbesondere die zulässige maximale Zeit "TO" zwischen dem Beginn und dem Ende einer Manipulation zu speichern, einem Zähler (18), der mit einer Zeitbasis (20) verbunden ist und die Zeit "TC", die zwischen zwei Manipulationen verstreicht, sowie die insgesamt verstrichene Zeit "TM" zwischen zwei Manipulationen aufzeichnet, und einem Komparator (21), der eine erste Einheit (23) enthält, die dazu ausgelegt ist, auf einen EIN/AUS-Kommutator (24) einzuwirken, um über die Steuermittel (14) die Energieversorgung der Erfassungsmittel (10) und der Anzeigemittel (12) zu unterbrechen, wenn TC > TO, wobei die erste Einheit (23) außerdem dazu ausgelegt ist, kontinuierlich und am Ende einer Reihe von Manipulationen bestimmte Referenzzeiten des Speichers (11) zu modifizieren, unter denen die zulässige maximale Zeit "TO" zwischen dem Beginn und dem Ende einer Manipulation ist.

2. Vorrichtung nach Anspruch 1, **dadurch gekennzeichnet, dass** der Speicher (11) umfasst eine erste Zone (13), die ermöglicht, Sicherheitszeiten "TS" zu speichern, eine zweite Zone (15), die durch ein Schieberegister gebildet ist, eine dritte Zone (17), die ermöglicht, eine "Time Max", abgekürzt "TX", zu speichern, die einen Wert hat, der in einer zweiten Einheit (25) des Komparators (21) durch Vergleich mit der letzten TM gebildet wird, wobei der Wert TX in die letzte Zeile des Schieberegisters (15) am Ende einer Reihe von Manipulationen geschrieben wird, und eine vierte Zone (19), die ermöglicht, die TO der folgenden Reihe von Manipulationen mit einem Wert, der TO = TOM + TS entspricht, zu berechnen und zu speichern, wobei TOM den arithmetischen Mittelwert der Werte repräsentiert, die in das Schieberegister geschrieben worden sind.

3. Vorrichtung nach Anspruch 2, **dadurch gekennzeichnet, dass** TS ein für die Vorrichtung konstruktionsbedingt eigentümlicher Wert ist, der nicht modifiziert werden kann.

4. Vorrichtung nach Anspruch 2, **dadurch gekennzeichnet, dass** TS ein für die Vorrichtung konstruktionsbedingt eigentümlicher Wert ist und modifiziert werden kann, entweder durch Manipulation eines externen Steuerorgans (5) oder durch Definieren der neuen TS als Prozentsatz des letzten TOM.

5. Vorrichtung nach Anspruch 2, **dadurch gekennzeichnet, dass** bei einer Reihe von Manipulationen TM der neue Wert von TX wird, wenn ein Wert von TM größer als der letzte Wert von TX ist.

6. Vorrichtung nach Anspruch 2, **dadurch gekennzeichnet, dass**, wenn bei einer Reihe von Manipulationen TM kleiner als der Wert von TX bleibt, der Wert von TX unverändert bleibt.

7. Vorrichtung nach Anspruch 1, **dadurch gekennzeichnet, dass** sie außerdem ein externes Steuerorgan (5) umfasst, das unabhängig von der Anzahl der früher ausgeführten Reihen von Manipulationen ermöglicht, TO auf ihren Anfangswert zurückzustellen und sogar nach mehr oder weniger zu modifizieren.

8. Vorrichtung nach Anspruch 7, **dadurch gekennzeichnet, dass** TO mittels des Steuerorgans (5) modifiziert wird, indem der in jede Zeile des Schieberegisters (15) des Speichers (11) geschriebene Wert geändert wird.

9. Vorrichtung nach Anspruch 1, **dadurch gekennzeichnet, dass** die Erfassungsmittel (10) durch eine Tastatur gebildet sind, die numerische oder alphanumerische Tasten (8) umfasst.

10. Vorrichtung nach Anspruch 9, **dadurch gekennzeichnet, dass** die Tasten (8) vom taktilen, kapazitiven oder resistiven Typ sind.

11. Vorrichtung nach Anspruch 9, **dadurch gekennzeichnet, dass** die Tasten (8) durch druckempfindliche Kontaktgeber gebildet sind.

12. Vorrichtung nach Anspruch 1, **dadurch gekennzeichnet, dass** die Anzeigemittel (12) durch Zeiger (4, 6) gebildet sind.

13. Vorrichtung nach Anspruch 1, **dadurch gekennzeichnet, dass** die Anzeigemittel (12) durch eine digitale Flüssigkristallanzeige gebildet sind.

14. Vorrichtung nach Anspruch 1, **dadurch gekennzeichnet, dass** die Anzeigemittel (12) durch Vibrationen oder codierte Züge von Vibrationen gebildet sind, die von der Vorrichtung ausgesendet werden, um für den Anwender eine Nachricht anzuzeigen.

15. Vorrichtung nach einem der Ansprüche 1 bis 14, **dadurch gekennzeichnet, dass** das tragbare elektronische Gerät (1) eine Armbanduhr ist, die ein Gehäuse (3), ein Zifferblatt (9), ein Uhrenglas (7) und eine Zeitbasis (18) enthält und ermöglicht, die momentane Uhrzeit anzuzeigen, wenn die Erfassungsmittel (10) inaktiv sind, und dass die Anzeigemittel (12) von dem Zifferblatt (9) getragen werden und die Erfassungsmittel (10) durch einen taktilen Schirm mit lichtdurchlässigen Elektroden, die von dem Uhrenglas (7) getragen werden, oder durch in einen Glasreif oder in das Gehäuse oder in die Zweige des Armbands integrierte Tasten gebildet sind.
